# EUROPÄISCHE PATENTSCHRIFT

(11) **EP 1 003 753 B1**
(45) Veröffentlichungstag und Bekanntmachung des Hinweises auf die Patenterteilung: **05.03.2003**
(21) Anmeldenummer: 98942608.5
(22) Anmeldetag: 23.07.1998
(51) Int. Cl.: C07F 5/06, C08F 10/00

(54) **BOR UND ALUMINIUM ENTHALTENDE VERBINDUNGEN**
COMPOUNDS CONTAINING BORON AND ALUMINIUM
COMPOSES CONTENANT DU BORE ET DE L'ALUMINIUM

(30) Priorität: 31.07.1997 DE 19733017
(43) Veröffentlichungstag der Anmeldung: 31.05.2000
(73) Patentinhaber: Basell Polyolefine GmbH, 67056 Ludwigshafen (DE)
(72) Erfinder: BOHNEN, Hans, D-65527 Niedernhausen (DE)
(86) Internationale Anmeldenummer: EP9804628
(87) Internationale Veröffentlichungsnummer: WO99006414

(56) Entgegenhaltungen:
- EP-A- 0 601 830
- WO-A-95/14024
- CHEMICAL ABSTRACTS, vol. 108, no. 15, 11. April 1988 Columbus, Ohio, US; abstract no. 132039, SYNORADZKI, LUDWIK ET AL: "Preparation of boron-aluminum oxides" XP002084605 & PL 130 177 A (POLITECHNIKA WARSZAWSKA, POL.)
- SYNORADZKI, LUDWIK ET AL: "Reaction of diethylhydroxyborane with trialkylaluminum" J. ORGANOMET. CHEM. (1985), 284(1), 1-4 CODEN: JORCAI;ISSN: 0022-328X,1985, XP002084603
- ANTON, KLAUS ET AL: "Chemistry of boron. 134. Adducts of (dimethylamino)boranes with aluminum and gallium halides" CHEM. BER. (1984), 117(3), 863-74 CODEN: CHBEAM;ISSN: 0009-2940,1984, XP002084604
- CHEMICAL ABSTRACTS, vol. 126, no. 14, 7. April 1997 Columbus, Ohio, US; abstract no. 186532, NAKANAGA, KENJI ET AL: "Olefin polymerization catalysts for manufacture of polyolefins with narrow molecular weight and broad composition distributions" XP002084606 & JP 09 012618 A (IDEMITSU KOSAN CO, JAPAN)

## Beschreibung

Die vorliegende Erfindung betrifft eine chemische Verbindung, die in Kombination mit einem Metallocen ein Katalysatorsystem bilden kann, welches vorteilhaft zur Polymerisation von Olefinen eingesetzt werden kann. Hierbei kann auf die Verwendung von Aluminiumoxan wie Methylaluminiumoxan (MAO) als Cokatalysator verzichtet werden und dennoch hohe Katalysatoraktivität erzielt werden.

Die Rolle von kationischen Komplexen bei der Ziegler-Natta-Polymerisation mit Metallocenen ist allgemein anerkannt (H. H. Brintzinger, D. Fischer, R. Mülhaupt, R. Rieger, R. Waymouth, Angew. Chem. 1995, 107, 1255 - 1283).
MAO als bislang wirksamster Co-Katalysator hat den Nachteil in hohem Überschuß eingesetzt zu werden, was zu einem hohen Aluminiumanteil im Polymer führt. Die Darstellung kationischer Alkylkomplexe eröffnet den Weg MAO freier Katalysatoren mit vergleichbarer Aktivität, wobei der Co-Katalysator nahezu stöchiometrisch eingesetzt werden kann.
Die Synthese von "Kationen-ähnlichen" Metallocen-Polymerisationskatalysatoren, wird im J. Am. Chem. Soc. 1991, 113, 3623 beschrieben. Darin erfolgt die Alkylabstraktion von einer Metallocenalkylverbindung mittels Trispentafluorphenylboran. In EP 427 697 wird dieses Syntheseprinzip und ein entsprechendes Katalysatorsystem, bestehend aus einer neutralen Metallocenspezies (z. B. Cp₂ZrMe₂), einer Lewis-Säure (z. B. B(C₆F₅)₃) und Aluminiumalkylen beansprucht. Ein Verfahren zur Herstellung von Salzen der allgemeinen Form LMX⁺ XA⁻ nach dem oben beschriebenen Prinzip wird in EP 520 732 beansprucht.

Organoboraluminiumverbindungen als Katalysator-Komponenten werden in EP-A-601 830 offenbart.

Nachteile bekannter alternativer Co-Katalysatorsysteme sind ihre hohe Empfindlichkeit gegenüber Katalysatorgiften und das Problem des "leaching" bei der Trägerung der Katalysatorsysteme.

Die Aufgabe der vorliegenden Erfindung bestand darin eine chemische Verbindung zur Verfügung stellen, welche die Nachteile des Standes der Technik vermeidet und trotzdem hohe Polymerisationsaktivitäten ermöglicht.
Die vorliegende Erfindung betrifft somit eine neue chemische Verbindung, sowie ein Verfahren zur Herstellung dieser chemischen Verbindung. Ferner betrifft sie ein Katalysatorsystem enthaltend mindestens ein Metallocen und mindestens eine erfindungsgemäße chemische Verbindung als Co-Katalysator. Das Katalysatorsystem kann zudem zusätzlich weitere Organometallkomponente enthalten und auf einem Trägermaterial fixiert sein. Ferner wird ein Verfahren zur Herstellung von Polyolefinen beschrieben.

Die Aufgabe wird gelöst, durch eine chemische Verbindung der Formel A, 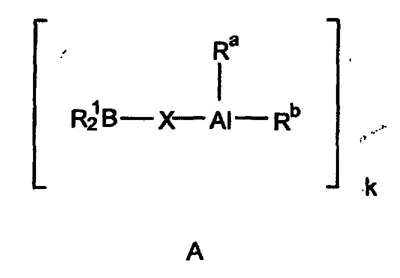 worin R¹ gleich oder verschieden sind und ein Wasserstoffatom, C₁-C₂₀-Halogenalkyl, C₆-C₂₀-Aryl, C₆-C₂₀-Halogenaryl, C₈-C₂₀-Aryloxy, C₇-C₄₀-Arylalkyl oder C₇-C₄₀-Halogenarylalkyl, C₇-C₄₀-Alkylaryl, C₇-C₄₀-Halogenalkylaryl sind oder R¹ kann eine OSiR₃³-Gruppe sein, worin R³ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₈-C₂₀-Aryloxy, C₇-C₄₀-Arylalkyl, C₇-C₄₀-Halogenarylalky, C₇-C₄₀-Alkylaryl, C₇-C₄₀-Halogenalkylaryl sind oder R¹ kann eine CH(SiR⁴₃)₂-Gruppe sein, worin R⁴ gleich oder verschieden sind und ein Wasserstoffatom, ein Halogenatom, C₁-C₂₀-alkyl, C₁-C₂₀-Halogenalkyl, C₁-C₁₀-Alkoxy,
C₆-C₂₀-Aryl, C₆-C₂₀-Halogenaryl, C₆-C₂₀-Aryloxy, C₇-C₄₀-Arylalky, C₇-C₄₀-Halogenarylalkyl, C₇-C₄₀-Alkylaryl, C₇-C₄₀-Halogenalkylaryl sein,
X ist gleich oder verschieden ein Element der Gruppe VIa des Periodensystems der Elemente oder eine NR-Gruppe, mit R gleich Wasserstoff oder C₁-C₂₀-Alkyl oder C₆-C₂₀-Aryl,
R^{a} und R^{b} können gleich oder verschieden sein und sind ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalky, C₇-C₄₀-Alkylaryl, C₇-C₄₀-Halogenalkylaryl sind oder R^{a} oder R^{b} kann eine OSiR₃³-Gruppe sein, worin R³ gleich oder verschieden sind und ein Wasserstoffatom, ein Halogenatom, C₁-C₂₀-alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind .

Außerdem können R^{a} und R^{b} -X-BR₂¹ sein, worin X und R¹ die oben genannte Bedeutung haben und k ist eine ganze Zahl von 1 bis 100 ist.

Die erfindungsgemäße Verbindung der Formel A kann durch Säure-Base Wechselwirkungen Dimere, Trimere oder höhere Oligomere bilden, wobei k eine natürliche Zahl von 1 bis 100 sein kann.

Bevorzugte chemische Verbindungen der Formel A entsprechen den allgemeinen Formeln I, II und III: 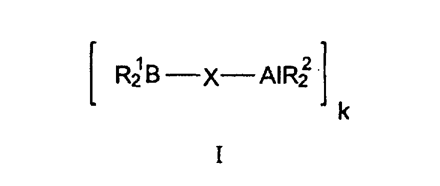 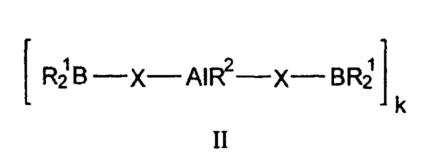 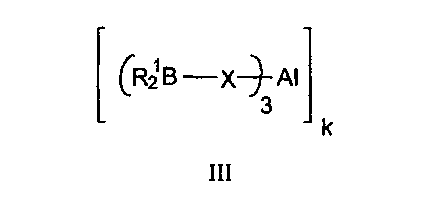 worin R¹ gleich oder verschieden sind und ein Wasserstoffatom, C₁-C₂₀-Halogenalkyl, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind oder R¹ kann eine OSiR₃³-Gruppe sein, worin R³ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind oder R¹ kann eine CH(SiR⁴₃)₂-Gruppe sein, worin R⁴ gleich oder verschieden sind und ein Wasserstoffatom, ein Halogenatom, C₁-C₂₀-alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalky, C₇-C₄₀-Alkylaryl, C₇-C₄₀-Halogenalkylaryl sind.
R² sind gleich oder verschieden Wasserstoffatom, ein Halogenatom, C₁-C₂₀-alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalky, C₇-C₄₀-Alkylaryl, C₇-C₄₀-Halogenalkylaryl oder R² kann eine OSiR₃³-Gruppe sein, worin R³ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-AlkyIaryl, C₇-C₄₀-Halogenalkylaryl sind.
X ist gleich oder verschieden ein Element der Gruppe Vla des Periodensystems der Elemente oder eine NR-Gruppe, worin R ein Wasserstoffatom, C₁-C₂₀-Alkyl oder C₆-C₂₀-Aryl ist.

Die erfindungsgemäßen Verbindungen der Formeln I - III können durch Säure-Base Wechselwirkungen untereinander Dimere, Trimere oder höhere Oligomere bilden, wobei k eine ganze Zahl von 1 bis 100 sein kann.

Insbesondere bevorzugt sind Verbindungen I - III, in denen X ein Sauerstoffatom oder eine NH-Gruppe ist.
R¹ ist bevorzugt Trifluormethyl-, Pentachlorethyl-, Heptafluorisopropyl oder Monofluorisobutyl oder Pentafluorphenyl-, Heptachlornaphtyl-, Heptafluornaphthyl-, Heptafluortolyl-, 3,5-bis(trifluormethyl)phenyl-, 2,4,6-tris(trifluormethyl)phenyl oder 4-(trifluormethyl)phenyl. Ebenfalls bevorzugt für R¹ sind Reste wie Phenyl-, Tolyl- oder 2,3-Dimethyl-phenyl.
Besonders bevorzugt sind die Reste Pentafluorphenyl-, Phenyl-, 3,5-bis(trifluormethyl)phenyl- und 4-Methyl-phenyl.
R² ist bevorzugt ein Wasserstoffatom, Trifluormethyl-, Pentachlorethyl-, Heptafluorisopropyl oder Monofluorisobutyl oder Pentafluor-phenyl-, Heptachlornaphtyl-, Heptafluornaphthyl-, Heptafluortolyl-, 3,5-bis(trifluormehtyl)phenyl-, 2,4,6-tris(trifluormethyl)phenyl oder 4-(trifluormethyl)phenyl. Ebenfalls bevorzugt für R² sind Reste wie Phenyl-, Methyl-, Ethyl-, Propyl-, Isopropyl-, Butyl-, Tolyl- 4-Methyl-phenyl, oder 2,3-Dimethyl-phenyl.
Besonders bevorzugt sind die Reste R² Pentafluorphenyl-, Phenyl-, 3,5-bis(trifluormethyl)phenyl- und 4-Methyl-phenyl, Methyl, Ethyl-, Isopropyl-, Butyl- oder Propyl-.
k ist bevorzugt eine ganze Zahl von 1 bis 10, besonders bevorzugt 1, 2, 3 oder 4.

Verbindungen der Formel A sind erhältlich durch Umsetzung von Hydroxy-organoborinen der Formel IV oder Diorganoborinsäureanhydriden der Formel V mit Organoaluminiumverbindungen der Formel VI,

R₂ ¹B―XR⁶ IV

R₂ ¹B―X―BR¹ ₂ V

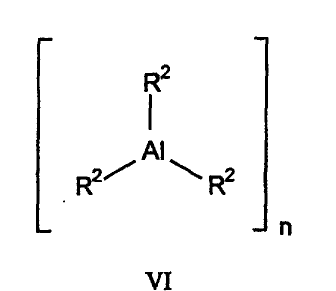

worin R⁶ ein Wasserstoffatom C₁-C₂₀-Alkyl, C₆-C₂₀-Aryl, C₇-C₄₀-Arylalky, C₇-C₄₀-Alkylaryl sein kann und worin R¹ gleich oder verschieden sind und ein Wasserstoffatom, C₁-C₂₀-Halogenalkyl, C₆-C₂₀-Aryl, C₆-C₂₀-Halogenaryl, C₆-C₂₀-Aryloxy, C₇-C₄₀-Arylalky, C₇-C₄₀-Halogenarylalkyl, C₇-C₄₀-Alkylaryl, C₇₋C₄₀-Halogenalkylaryl sind oder R¹ kann eine OSiR₃³-Gruppe sein, worin R³ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxyl, C₇-C₄₀-Arylalkyl, C₇-C₄₀-Halogenarylalky, C₇-C₄₀-Alkylaryl, C₇-C₄₀-Halogenalkylaryl sind, oder R¹ kann eine CH(SiR⁴₃)₂-Gruppe sein, worin R⁴ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind.

R¹ sind gleich oder verschieden und bevorzugt Trifluormethyl-, Pentachlorethyl-, Heptafluorisopropyl oder Monofluorisobutyl oder Pentaffuorpheny-, Heptachlornaphtyl-, Heptafluornaphthyl-, Heptafluortolyl-, 3,5-bis(trifluormehtyl)phenyl-, 2,4,6-tris(trifluormethyl)phenyl oder 4-(trifluormethyl)phenyl. Ebenfalls bevorzugt für R¹ sind Reste wie Phenyl-, Biphenyl-, Naphthyl, Anisyl-, Tolyl- oder 2,3-Dimethyl-phenyl.
R² sind gleich oder verschieden ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalkyl, C₇-C₄₀-Alkylaryl, C₇-C₄₀-Halogenalkylaryl oder R² kann eine OSiR₃³-Gruppe sein, worin R³ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind.
R² ist bevorzugt ein Wasserstoffatom, ein Halogenatom Trifluormethyl-, Pentachlorethyl-, Heptafluorisopropyl oder Monofluorisobutyl oder Pentafluorphenyl-, Heptachlornaphtyl-, Heptafluornaphthyl-, Heptafluortolyl-, 3,5-bis(trifluormehtyl)phenyl-, 2,4,6-tris(trifluormethyl)phenyl oder 4-(trifluormethyl)phenyl. Ebenfalls bevorzugt für R² sind Reste wie Phenyl-, Mehtyl-, Ethyl-, Isopropyl-, Butyl-, Tolyl- oder 2,3-Dimethyl-phenyl.
X ist gleich oder verschieden ein Element der Gruppe Vla des Periodensystems der Elemente oder eine NR-Gruppe, worin R ein Wasserstoffatom oder C₁-C₂₀-Alkyl oder C₆-C₂₀-Aryl ist,
und n ist eine ganze Zahl von 1 bis 10. Bevorzugt ist n gleich 1, 2, 3 oder 4. Bevorzugt sind Verbindungen in denen X ein Sauerstoff-Atom oder eine NH-Gruppe ist.

Beispiele für Verbindungen der Formel IV und V sind:
Di(pentafluorphenyl)borinsäure
Di(phenyl)borinsäure
Di(o-tolyl)borinsäure
Di(m-tolyl)borinsäure
Di(p-tolyl)borinsäure
Di(p-anisyl)borinsäure
Di(p-biphenyl)borinsäure
Di(p-chlorphenyl)borinsäure
Di(α-naphthyl)borinsäure
Di(p-fluor-phenyl)borinsäure
Di(p-brom-phenyl)borinsäure
Di(mesityl)borinsäure
1-Naphthyl-phenyl-borinsäure
Di(phenyl)borinsäure-anhydrid
Di(pentafluorphenyl)borinsäure-anhydrid
Di(p-tolyl)borinsäure-anhydrid
Di(1-naphthyl)borinsäure-anhydrid
Di(mesityl)borinsäure-anhydrid
Di(methyl-phenyl)borinsäure-anhydrid
Di(3,5-bis-trifluormethyl-phenyl)borinsäure-anhydrid
Diphenylboranylamin
Di-p-tolylboranylamin
Dimesitylboranylamin
Di-1 -naphthylboranylamin
Aminodibis(trimethylsilyl)methylboran

Beispiele für Verbindungen der Formel VI sind:
Trimethylaluminium
Triethylaluminium
Triisopropylaluminium
Trihexylaluminium
Trioctylaluminium
Tri-n-butylaluminium
Tri-n-propylaluminium
Triisoprenaluminium
Dimethylaluminiummonochlorid
Diethylaluminiummonochlorid
Diisobutylaluminiummonochlorid
Methylaluminiumsesquichlorid
Ethylaluminiumsesquichlorid
Dimethylaluminiumhydrid
Diethylaluminiumhydrid
Diisopropylaluminiumhydrid
Dimethylaluminium(trimethylsiloxid)
Dimethylaluminium(triethylsiloxid)
Phenylalan
Pentafluorphenylalan
o-Tolylalan

Zur Herstellung der cokatalytisch wirkenden Organoboraluminiumverbindung der Formel A können eine oder mehrere Verbindungen der Formeln IV und V mit einer oder mehreren Verbindungen der Formel VI, in jedem beliebigen stöchiometrischen Verhältnis, umgesetzt werden. Bevorzugt ist die Menge von 2 bis 6 Äquivalenten einer Verbindung der Formel IV oder V mit einem Äquivalent der Formel VI. Besonders bevorzugt ist die Menge von 2 bis 2.5 Äquivalenten einer Verbindung der Formeln IV und V mit einem Äquivalent der Formel VI.
Die Umsetzung erfolgt in einem aliphatischen oder aromatischen Lösemittel wie Toluol, Heptan, Tetrahydrofuran oder Diethylether. Es können auch Lösemittelgemische eingesetzt werden. Die cokatalytisch wirkende Organoboraluminiumverbindung der Formel A kann isoliert werden oder ohne Isolierung in Lösung weiter umgesetzt werden. Unter dem Begriff Lösung bzw. Lösemittel werden auch Suspensionen bzw. Suspensionsmittel verstanden, d. h. die in dem erfindungsgemäßen Verfahren eingesetzten Edukte wie auch die erhaltenen Produkte können zum Teil oder vollständig gelöst sein oder auch zum Teil oder vollständig suspendiert vorliegen.

Beispiele zur näheren Erläuterung für die erfindungsgemäße chemische Verbindung der Formel A sind:

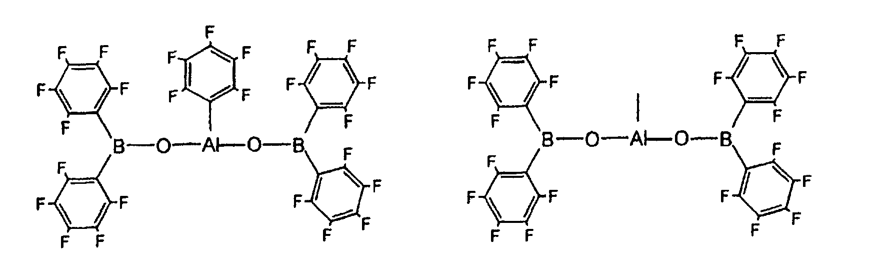

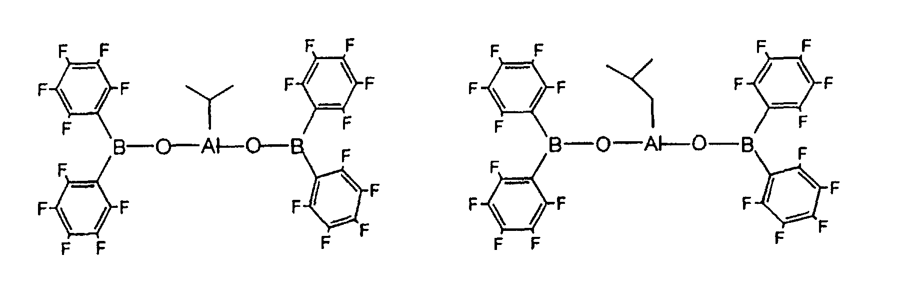

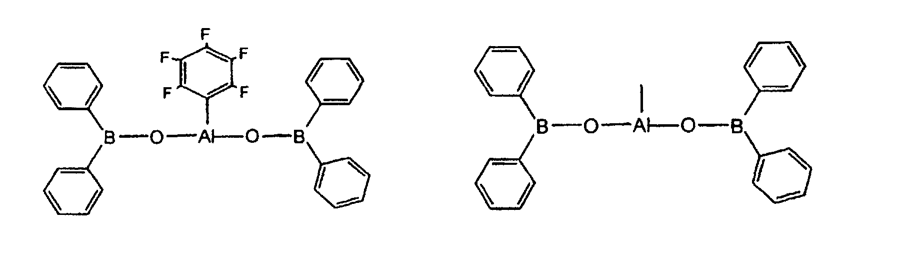

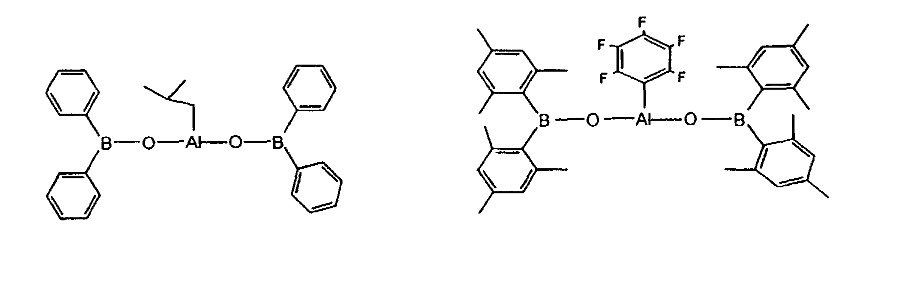

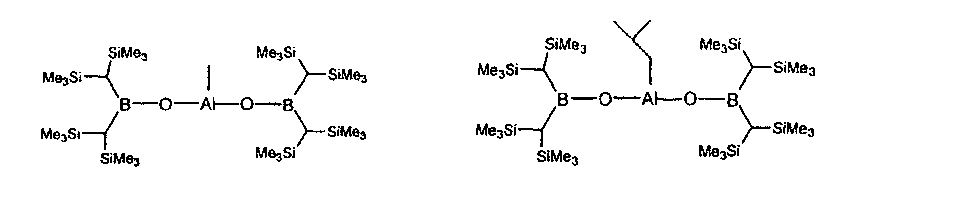

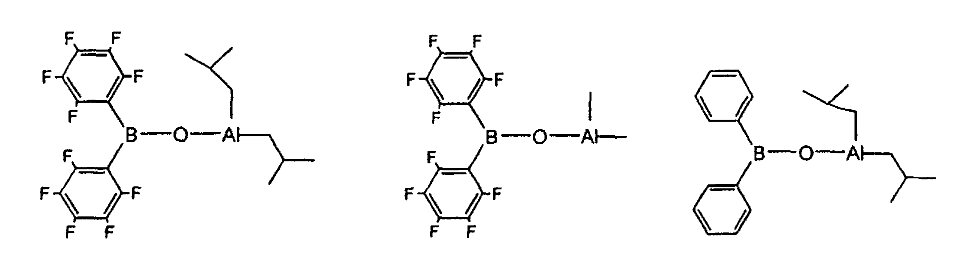

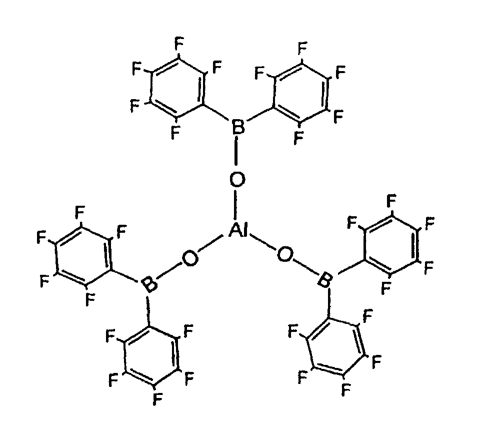

Die erfindungsgemäße chemische Verbindung der Formel A kann zusammen mit einer Übergangsmetallverbindung als Katalysatorsystem z. B. zur Olefinpolymerisation verwendet werden. Als Übergangsmetallverbindung werden Metallocenverbindungen eingesetzt. Dies können z. B. verbrückte oder unverbrückte Biscyclopentadienylkomplexe sein, wie sie z. B. in EP 129 368, EP 561 479, EP 545 304 und EP 576 970 beschrieben sind, Monocyclopentadienylkomplexe, wie verbrückte Amidocyclopentadienylkomplexe, die z.B in EP 416 815 beschrieben sind, mehrkernige Cyclopentadienylkomplexe wie in EP 632 063 beschrieben, π-Ligand substituierte Tetrahydropentalene wie in EP 659 758 beschrieben oder π-Ligand substituierte Tetrahydroindene wie in EP 661 300 beschrieben.

Bevorzugte Metallocenverbindungen sind unverbrückte oder verbrückte Verbindungen der Formel VII, 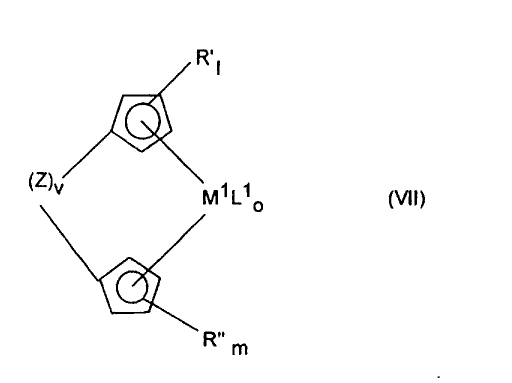 worin
- M¹: ein Metall der III., IV., V. oder VI. Nebengruppe des Periodensystems der Elemente ist, insbesondere Ti, Zr oder Hf,
- R¹: gleich oder verschieden sind und ein Wasserstoffatom oder SiR₃^{3'} sind, worin R³' gleich oder verschieden ein Wasserstoffatom oder eine C₁-C₄₀-kohlenwasserstoffhaltige Gruppe wie C₁-C₂₀-Alkyl, C₁-C₁₀-Fluoralkyl, C₁-C₁₀-Alkoxy, C₆-C₂₀-Aryl, C₆-C₂₀-Fluoraryl, C₆-C₁₀-Aryloxy, C₂-C₁₀-AIkenyl, C₇-C₄₀-Arylalkyl, C₇-C₄₀-Alkylaryl oder C₈-C₄₀-Arylalkenyl sind, oder R¹ sind eine C₁-C₃₀ - kohlenwasserstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl. C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R' können so miteinander verbunden sein, daß die Reste R' und die sie verbindenden Atome des Cyclopentadienylringes ein C₄-C₂₄-Ringsystem bilden, welches seinerseits substituiert sein kann,
- R": gleich oder verschieden sind und ein Wasserstoffatom oder SiR₃^{3'} sind, worin R^{3'} gleich oder verschieden ein Wasserstoffatom oder eine C₁-C₄₀-kohlenwasserstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R" sind eine C₁-C₃₀ - kohlenwasserstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R" können so miteinander verbunden sein, daß die Reste R" und die sie verbindenden Atome des Cyclopentadienylringes ein C₄-C₂₄-Ringsystem bilden, welches seinerseits substituiert sein kann,
- l: gleich 5 für v = 0, und l gleich 4 für v = 1 ist,
- m: gleich 5 für v = 0, und m gleich 4 für v = 1 ist,
- L¹: gleich oder verschieden sein können und ein Wasserstoffatom, ein Halogenatom eine C₁-C₁₀ Alkyl-Gruppe, eine C₇-C₄₀ Arylalkyl-Gruppe, eine C₆-C₄₀ Arylgruppe, oder OR^{6'}, SR^{6'}, OSiR₃^{6'}, SiR₃^{6'}, PR₂^{6'} oder NR₂^{6'} bedeuten, worin R^{6'} ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen M²R^{5'}R⁵, worin M² Kohlenstoff, Silizium, Germanium oder Zinn ist und R^{5'} und R⁵ gleich oder verschieden eine C₁-C₂₀-kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R' und/oder R" ein mono- oder polycyclisches Ringsystem bilden.

Bevorzugt sind chirale verbrückte Metallocenverbindungen der Formel VII, insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.

Chirale verbrückte Metallocenverbindungen der Formel (VII) können als reine racemische oder reine meso Verbindungen eingesetzt werden. Es können aber auch Gemische aus einer racemischen Verbindung und einer meso Verbindung verwendet werden.

Beispiele für Metallocenverbindungen sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiylbis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdi-chlorid
Methyl(phenyl)silandiylbis(2-methyl4,5-(tetramethylbenzo)-indenyl)zirkonium-dichlorid
Methyl(phenyl)silandiylbis(2-methyl-4- -acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-(η⁵-Cyclopentadienyl)-4,6,6-trimethyl-(η⁵-4,5-tetrahydropentalen)]-dichlorozirconium
[4-(η⁵-3'-Trimethylsilyl-cyclopentadienyl)4,6,6-trimethyl-(η⁵-4,5-tetrahydropentalen)]-dichlorozirconium
[4-(η⁵-3'-isopropyl-cyclopentadienyl)-4,6,6-trimethyl-(η⁵-4,5-tetrahydropentalen)]-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-Cyclopentadienyl)-4,7,7-trimethyl-(η⁵-4,5,6,7-tetrahydroindenyl)]-dichlorohafnium
[4-(η⁵-3'-tert.Butyl-cyclopentadienyl)4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4-(η⁵-3'-Methylcyclopentadienyl)-4,7,7-trimethyl-(η⁵-4,5,6,7-tetrahydroindenyl)]-dichlorotitan
4-(η⁵-3'-Trimethylsilyl-cyclopentadienyl)-2-trimethylsilyl-4,7,7-trimethyl-(η⁵-4,5,6,7-tetrahydroindenyl)]-dichlorotitan
4-(η⁵-3'-tert.Butyl-cyclopentadienyl)-4,7,7-trimethyl-(η⁵-4,5,6,7-tetrahydroindenyl)]-dichlorozirkonium
(Tertbutylamido)-(tetramethyl-η⁵-cyclopentadienyl)-dimethylsilyl-dichlorotitan
(Tertbutylamido)-(tetramethyl-η⁵-cyclopentadienyl)-1,2-ethandiyl-dichlorotitan-dichlorotitan
(Methylamido)-(tetramethyl-η⁵-cyclopentadienyl)-dimethylsilyl-dichlorotitan
(Methylamido)-(tetramethyl-η⁵-cyclopentadienyl)-1,2-ethandiyl-dichlorotitan
(Tertbutylamido)-(2,4-dimethyl-2,4-pentadien-1-yl)-dimethylsilyl-dichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis(η⁵-1H-inden-1-yliden)methylsilyl]-3-η⁵-cyclopenta-2,4-dien-1-yliden)-3-η⁵-9H-fluoren-9-yliden)butan]di-zirkonium
Tetrachloro-[2-[bis(η⁵-2-methyl-1H-inden-1-yliden)methoxysilyl]-5-(η⁵-2,3,4,5-tetramethylcyclopenta-2,4-dien-1-yliden)-5-(η⁵-9H-fluoren-9-yliden)hexan]di-zirkonium
Tetrachloro-[1-[bis(η⁵-1H-inden-1-yliden)methylsilyl]-6-(η⁵-cyclopenta-2,4-dien-1-yliden)-6-(η⁵-9H-fluoren-9-yliden)-3-oxaheptan]di-zirkonium
Dimethylsilandiylbis(indenyl)zirkoniumdimethyl
Dimethylsilandiylbis(4-naphthyl-indenyl)zirkoniumdimethyl
Dimethylsilandiylbis(2-methyl-benzo-indenyl)zirkoniumdimethyl
Dimethylsilandiylbis(2-methyl-indenyl)zirkoniumdimethyl
Dimethylsilandiylbis(2-methyl-4-(1-naphthyl)-indenyl)zirkoniumdimethyl
Dimethylsilandiylbis(2-methyl-4-(2-naphthyl)-indenyl)zirkoniumdimethyl
Dimethylsilandiylbis(2-methyl-4-phenyl-indenyl)zirkoniumdimethyl
Dimethylsilandiylbis(2-methyl-4-t-butyl-indenyl)zirkoniumdimethyl
Dimethylsilandiylbis(2-methyl-4-isopropyl-indenyl)zirkoniumdimethyl
Dimethylsilandiylbis(2-methyl-4-ethyl-indenyl)zirkoniumdimethyl
Dimethylsilandiylbis(2-methyl-4-acenaphth-indenyl)zirkoniumdimethyl
Dimethylsilandiylbis(2,4-dimethyl-indenyl)zirkoniumdimethyl
Dimethylsilandiylbis(2-ethyl-indenyl)zirkoniumdimethyl
Dimethylsilandiylbis(2-ethyl-4-ethyl-indenyl)zirkoniumdimethyl
Dimethylsilandiylbis(2-ethyl-4-phenyl-indenyl)zirkoniumdimethyl
Dimethylsilandiybis(2-methyl-4,5-benzo-indenyl)zirkoniumdimethyl
Dimethylsilandiylbis(2-methyl-4,6 diisopropyl-indenyl)zirkoniumdimethyl
Dimethylsilandiylbis(2-methyl-4,5 diisopropyl-indenyl)zirkoniumdimethyl
Dimethylsilandiylbis(2,4,6-trimethyl-indenyl)zirkoniumdimethyl
Dimethylsilandiylbis(2,5,6-trimethyl-indenyl)zirkoniumdimethyl
Dimethylsilandiylbis(2,4,7-trimethyl-indenyl)zirkoniumdimethyl
Dimethylsilandiylbis(2-methyl-5-isobutyl-indenyl)zirkoniumdimethyl
Dimethylsilandiylbis(2-methyl-5-t-butyl-indenyl)zirkoniumdimethyl
Methyl(phenyl)silandiylbis(2-methyl-4-phenyl-indenyl)zirkoniumdimethyl
Methyl(phenyl)silandiylbis(2-methyl-4,6 diisopropyl-indenyl)zirkoniumdimethyl
Methyl(phenyl)silandiylbis(2-methyl-4-isopropyl-indenyl)zirkoniumdimethyl
Methyl(phenyl)silandiylbis(2-methyl-4,5-benzo-indenyl)zirkoniumdimethyl
Methyl(phenyl)silandiylbis(2-methyl-4,5-(methylbenzo)-indenyl)zirkoniumdi-methyl
Methyl(phenyl)silandiylbis(2-methyl-4,5-(tetramethylbenzo)-indenyl)zirkoniumdimethyl
Methyl(phenyl)silandiylbis(2-methyl-4-acenaphth-indenyl)zirkoniumdimethyl
Methyl(phenyl)silandiylbis(2-methyl-indenyl)zirkoniumdimethyl
Methyl(phenyl)silandiylbis(2-methyl-5-isobutyl-indenyl)zirkoniumdimethyl
1,2-Ethandiylbis(2-methyl-4-phenyl-indenyl)zirkoniumdimethyl
1,4-Butandiylbis(2-methyl-4-phenyl-indenyl)zirkoniumdimethyl
1,2-Ethandiylbis(2-methyl-4,6 diisopropyl-indenyl)zirkoniumdimethyl
1,4-Butandiylbis(2-methyl-4-isopropyl-indenyl)zirkoniumdimethyl
1,4-Butandiylbis(2-methyl-4,5-benzo-indenyl)zirkoniumdimethyl
1,2-Ethandiylbis(2-methyl-4,5-benzo-indenyl)zirkoniumdimethyl
1,2-Ethandiylbis(2,4,7-trimethyl-indenyl)zirkoniumdimethyl
1,2-Ethandiylbis(2-methyl-indenyl)zirkoniumdimethyl
1,4-Butandiylbis(2-methyl-indenyl)zirkoniumdimethyl
[4-(η⁵-Cyclopentadienyl)4,6,6-trimethyl-(η⁵-4,5-tetrahydropentalen)]-dimethylzirconium
[4-(η⁵-3'-Trimethylsilyl-cyclopentadienyl)-4,6,6-trimethyl-(η⁵-4,5-tetrahydropentalen)]-dimethylzirconium
[4-(η⁵-3'-Isopropyl-cyclopentadienyl)-4,6,6-trimethyl-(η⁵-4,5-tetrahydropentalen)]-dimethylzirconium
[4-(η⁵-Cyclopentadienyl)-4,7,7-trimethyl-(η⁵-4,5,6,7-tetrahydroindenyl)]-dimethyltitan
[4-(η⁵-Cyclopentadienyl)-4,7,7-trimethyl-(η⁵-4,5,6,7-tetrahydroindenyl)]-dimethylzirkonium
[4-(η⁵-Cyclopentadienyl)-4,7,7-trimethyl-(η⁵-4,5,6,7-tetrahydroindenyl)]-dimethylhafnium
[4-(η⁵-3'-tert.Butyl-cyclopentadienyl)-4,7,7-trimethyl-(η⁵-4,5,6,7-tetrahydroindenyl)]-dimethyltitan
4-(η⁵-3'-Isopropylcyclopentadienyl)-4,7,7-trimethyl-(η⁵-4,5,6,7-tetrahydroindenyl)]-dimethyltitan
Dimethylsilandiylbis(2-methyl-4-(4'-tert.-butyl-phenyl)-indenyl)zirkoniumdichlorid
Dimethylsilandiylbis(2-methyl-4-(4'-tert.-butyl-phenyl)-indenyl)hafnuimdichlorid
Dimethylsilandiylbis(2-methyl-4-(4'-tert.-butyl-phenyl)-indenyl)titandichlorid
Dimethylsilandiylbis(2-methyl-4-(4'-methyl-phenyl)-indenyl)zirkoniumdichlorid
Dimethylsilandiylbis(2-methyl-4-(4'-ethyl-phenyl)-indenyl)zirkoniumdichlorid
Dimethylsilandiylbis(2-methyl-4-(4'-n-propyl-phenyl)-indenyl)zirkoniumdichlorid
Dimethylsilandiylbis(2-methyl-4-(4'-iso-propyl-phenyl)-indenyl)zirkoniumdichlorid
Dimethylsilandiylbis(2-methyl-4-(4'-n-butyl-phenyl)-indenyl)zirkoniumdichlorid
Dimethylsilandiylbis(2-methyl-4-(4'-hexyl-phenyl)-indenyl)zirkoniumdichlorid
Dimethylsilandiylbis(2-methyl-4-(4'-sec-butyl-phenyl)-indenyl)zirkoniumdichlorid
Dimethylsilandiylbis(2-ethyl4-phenyl)-indenyl)zirkoniumdichlorid
Dimethylsilandiylbis(2-ethyl-4-(4'-methyl-phenyl)-indenyl)zirkoniumdichlorid
Dimethylsilandiylbis(2-ethyl-4-(4'-ethyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-iso-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl)zirkoniumdichlorid
Dimethylsilandiylbis(2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl)-indenyl)zirkoniumdichlorid
Dimethylsilandiylbis(2-ethyl-4-(4'-tert.-butyl-phenyl)-indenyl)zirkoniumdichlorid
Dimethylsilandiylbis(2-n-propyl-4-phenyl)-indenyl)zirkoniumdichlorid
Dimethylsilandiylbis(2-n-propyl-4-(4'-methyl-phenyl)-indenyl)zirkoniumdichlorid
Dimethylsilandiylbis(2-n-propyl-4-(4'-ethyl-phenyl)-indenyl)zirkoniumdichlorid
Dimethylsilandiylbis(2-n-propyl-4-(4'-n-propyl-phenyl)-indenyl)zirkoniumdichlorid
Dimethylsilandiylbis(2-n-propyl-4-(4'-iso-propyl-phenyl)-indenyl)zirkoniumdichlorid
Dimethylsilandiylbis(2-n-propyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis(2-n-propyl-4-(4'-cyclohexyl-phenyl)-indenyl)zirkoniumdichlorid
Dimethylsilandiylbis(2-n-propyl-4-(4'-sec-butyl-phenyl)-indenyl)zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl)zirkoniumdichlorid
Dimethylsilandiylbis(2-n-butyl-4-(4'-methyl-phenyl)-indenyl)zirkoniumdichlorid
Dimethylsilandiylbis(2-n-butyl-4-(4'-ethyl-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl-4-(4'-iso-propyl-phenyl)-indenyl)zirkoniumdichlorid
Dimethylsilandiylbis(2-n-butyl-4-(4'-n-butyl-phenyl)-indenyl)zirkoniumdichlorid
Dimethylsilandiylbis(2-n-butyl-4-(4'-hexyl-phenyl)-indenyl)zirkoniumdichlorid
Dimethylsilandiylbis(2-n-butyl-4-(4'-cyclohexyl-phenyl)-indenyl)zirkoniumdichlorid
Dimethylsilandiylbis(2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl)zirkoniumdichlorid
Dimethylsilandiylbis(2-hexyl-4-(4'-ethyl-phenyl)-indenyl)zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4'-iso-propyl-phenyl)-indenyl)zirkoniumdichlorid
Dimethylsilandiylbis(2-hexyl-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiylbis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid
Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl)zirkoniumbis(dimethylamid)
Dimethylsilandiylbis(2-ethyl-4-(4'-tert.-butyl-phenyl)-indenyl)zirkoniumdibenzyl
Dimethylsilandiylbis(2-methyl-4-(4'-tert.-butyl-phenyl)-indenyl)zirkoniumdimethyl
Dimethylgermandiylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl)hafniumdichlorid
Dimethylgermandiylbis(2-propyl-4-(4'-tert.-butyl-phenyl)-indenyl)titandichlorid
Dimethylgermandiylbis(2-methyl-4-(4'-tert.-butyl-phenyl)-indenyl)zirkoniumdichlorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl
Ethylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4-phenyl)-indenyl)titandimethyl
Ethylidenbis(2-ethyl-4-(4'-tert.-butyl-phenyl)-indenyl)zirkoniumbis(dimethylamid)
Ethylidenbis(2-ethyl-4-(4'-tert.-butyl-phenyl)-indenyl)hafniumbis(dimethylamid)
Ethylidenbis(2-ethyl-4-(4'-tert.-butyl-phenyl)-indenyl)titanbis(dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl)-indenyl)hafniumdichlorid
Phenylphosphandiyl(2-ethyl-4-(4'-tert.-butyl-phenyl)-indenyl)zirkoniumdichlorid
Phenylphosphandiyl(2-methyl-4-(4'-tert.-butyl-phenyl)-indenyl)zirkoniumdichlorid
Phenylphosphandiyl(2-ethyl-4-(4'-tert.-butyl-phenyl)-indenyl)zirkoniumdichlorid
Dimethylsilandiyl(indenyl)zirkoniumdichlorid
Dimethylsilandiyl(4-naphthyl-indenyl)zirkoniumdichlorid
Dimethylsilandiyl(2-methyl-benzo-indenyl)zirkoniumdichlorid
Dimethylsilandiyl(2-methyl-indenyl)zirkoniumdichlorid
Dimethylsilandiyl(2-methyl-4-phenyl-indenyl)zirkoniumdichlorid
Dimethylsilandiyl(2-methyl-4-(1-naphthyl)-indenyl)zirkoniumdichlorid
Dimethylsilandiyl(2-methyl-4-(2-naphthyl)-indenyl)zirkoniumdichlorid
Dimethylsilandiyl(2-methyl-4-isopropyl-indenyl)zirkoniumdichlorid
Dimethylsilandiyl(2-methyl-4-acenaphthyl-indenyl)zirkoniumdichlorid

Zur Herstellung des erfindungsgemäßen Katalysatorsystems kann eine oder mehrere Verbindungen der Formeln A mit einer Metallocenverbindung, z. B. der Formel VII, in jedem beliebigen stöchiometrischen Verhältnis umgesetzt werden. Hierzu kann optional noch zusätzlich eine oder mehrere Verbindungen der Formel VI in jedem beliebigen stöchiometrischen Verhältnis gegeben werden.

Bei der Herstellung des erfindungsgemäßen Katalysatorsystems wird bevorzugt ein Mol-Verhältnis AI: M¹ zwischen den Verbindungen der Formeln A und der Formel VII von 0.01 bis 100 000 eingesetzt. Bevorzugt wird dabei ein Mol-Verhältnis von 0.1 bis 1000, ganz besonders bevorzugt wird ein Mol-Verhältnis von 1 bis 100 eingesetzt. Hierzu kann eine Verbindung der Formel VI in einem Mol-Verhältnis Al: M¹ von 0.01 bis 10000 zusätzlich zugegeben werden. Bevorzugt wird ein Mol-Verhältnis von 0.1 bis 1000, ganz besonders bevorzugt wird ein Mol-Verhältnis von 1 bis 100 eingesetzt.
Die Verbindungen können in jeder möglichen Reihenfolge miteinander in Kontakt gebracht werden. Eine mögliche Verfahrensweise ist, daß eine Organoübergangsmetallverbindung der Formel VII in einem aliphatischen oder aromatischen Lösemittel gelöst bzw. suspendiert wird. Im Anschluß daran wird eine Organoboraluminiumverbindung der Formeln A entweder in Substanz oder in gelöster bzw. in suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Danach wird eine Verbindung der Formel VI in gelöster bzw. in suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Die einzelnen Komponenten können auch nacheinander, in einer beliebigen Reihenfolge, in den Polymerisationskessel eingegeben werden, oder eine oder mehrere Verbindungen der Formel IV und V reagieren in einem Lösemittel mit einer oder mehreren Verbindungen der Formel VI zu einer oder mehreren Verbindungen der Formeln A. Diese werden in den Polymerisationskessel eingegeben und anschließend wird eine oder mehrere Verbindungen der Formel VI zudosiert.

Die erfindungsgemäßen Katalysatorsysteme können ungeträgert oder auch geträgert zur Polymerisation eingesetzt werden. Bevorzugt enthält der Träger mindestens ein anorganisches Oxid, wie Siliziumoxid, Aluminiumoxid, Zeolithe, MgO, ZrO₂, TiO₂, B₂O₃, CaO, ZnO, ThO₂, Na₂CO₃, K₂CO₃, CaCO₃, MgCO₃, Na₂SO₄, Al₂(SO₄)₃, BaSO₄, KNO₃, Mg(NO₃)₂, AI(NO₃)₃ ,Na₂O, K₂O, oder Li₂O, insbesondere Siliziumoxid und/oder Aluminiumoxid. Der Träger kann auch mindestens ein Polymer enthalten, z. B. ein Homo- oder Copolymer,ein vernetztes Polymer oder Polymerblends. Beispiele für Polymere sind Polyethylen, Polypropylen, Polybuten, Polystyrol, mit Divinylbenzol vernetztes Polystyrol, Polyvinylchlorid, Acryl-Butadien-Styrol-Copolymer, Polyamid, Polymethacrylat, Polycarbonat, Polyester, Polyacetal oder Polyvinylalkohol.

Der Träger kann eine spezifische Oberfläche im Bereich von 10 bis 1000 m²/g, bevorzugt von 150 bis 500 m²/g aufweisen. Die mittlere Partikelgröße des Trägers kann 1 bis 500 µm, bevorzugt 5 bis 350 µm, besonders bevorzugt 10 bis 200 µm betragen.

Bevorzugt ist der Träger porös mit einem Porenvolumen des Trägers von 0,5 bis 4,0 ml/g, bevorzugt 1,0 bis 3,5 ml/g. Ein poröser Träger weist einen gewissen Anteil an Hohlräumen (Porenvolumen) auf. Die Form der Poren ist meist unregelmäßig, häufig sphärisch ausgebildet. Die Poren können durch kleine Porenöffnungen miteinander verbunden sein. Der Porendurchmesser beträgt vorzugsweise etwa 2 bis 50 nm. Die Partikelform des porösen Trägers kann irregulär oder sphärisch sein und kann durch mechanische, chemischer oder thermische Nachbehandlung eingstellt werden. Die Teilchengröße des Trägers kann z. B. durch kryogene Mahlung und/oder Siebung beliebig eingestellt werden.
Das Trägermaterial kann zudem mit einer Verbindung der Formel VI vorbehandelt sein. Die Verbindung der Formel VI kann dabei dieselbe sein, welche zur Herstellung des Katalysatorsystems verwendet wird, kann aber auch davon verschieden sein. Außerdem kann das Trägermaterial auch mit anderen chemischen Verbindungen wie z. B. Trimethylchlorsilan, Tetrachlorsilan, Aminen wie Phenyldimethylamin, Pyridin, Mercaptanen wie Mercaptopropylmethyldimethoxysilan, Benzylchlorid, Phenylmethylchlorid oder Tosylaten vorbehandelt sein.

Das erfindungsgemäße Katalysatorsystem kann in jeder möglichen Kombination mit dem Träger in Kontakt gebracht werden.
Eine Variante ist, daß das Katalysatorsystem in Lösung hergestellt wird und anschließend mit dem Träger umgesetzt wird. Dazu wird eine Organometallverbindung z.B. der Formel VII in einem aliphatischen oder aromatischen Lösemittel wie Toluol, Heptan, Tetrahydrofuran oder Diethylether vorgelegt. Anschließend wird eine oder mehrere Verbindungen der Formeln A entweder in Substanz oder in gelöster Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Danach erfolgt die Zugabe einer Organoaluminiumverbindung der Formel VI entweder in Substanz oder in gelöster bzw. suspendierter Form zu dem Träger. Auch hier liegt die Reaktionszeit zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Alle Edukte können in jedem beliebigen, stöchiometrischen Verhältnis eingesetzt werden. Bevorzugt wird ein Mol-Verhältnis Al M¹ zwischen den Verbindungen der Formeln A und der Formel VII von 0.1 bis 1000, ganz besonders bevorzugt wird ein Mol-Verhältnis von 1 bis 100 eingesetzt. Das geträgerte Katalysatorsystem kann direkt zur Polymerisation eingesetzt werden. Es kann aber auch nach Entfernen des Lösemittels resuspendiert zur Polymerisation eingesetzt werden.

Zudem wird ein Verfahren zur Herstellung eines Olefinpolymers in Gegenwart des erfindungsgemäßen Katalysatorsystems beschrieben. Die Polymerisation kann eine Homo- oder eine Copolymerisation sein.

Bevorzugt werden Olefine der Formel R^{α}-CH=CH-R^{β} polymerisiert, worin R^{α} und R^{β} gleich oder verschieden sind und ein Wasserstoffatom, ein Halogenatom, eine Alkoxy-, Hydroxy-, Alkylhydroxy-, Aldehyd, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäure - oder Carbonsäureestergruppe substituiert sein kann, oder R^{α} und R^{β} mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tetracyclododecen, Ethylidennorbornen, Diene wie 1,3-Butadien oder 1,4-Hexadien, Biscyclopentadien oder Methacrylsäuremethylester.

Insbesondere werden Propylen oder Ethylen homopolymerisiert, Ethylen mit einem oder mehreren C₃-C₂₀-1-Olefinen, insbesondere Propylen, und /oder einem oder mehreren C₄-C₂₀-Diene, insbesondere 1,3-Butadien, copolymerisiert oder Norbornen und Ethylen copolymerisiert.
Die Polymerisation wird bevorzugt bei einer Temperatur von- 60 bis 300 °C, besonders bevorzugt 30 bis 250 °C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischem Medium durchgeführt werden.

Das geträgerte Katalysatorsystem kann als Pulver oder noch Lösemittel behaftet wieder resuspendiert und als Suspension in einem inerten Suspensionsmittel in das Polymerisationssystem eindosiert werden.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.

Zur Herstellung von Olefinpolymeren mit breiter Molekulargewichtsverteilung werden bevorzugt Katalysatorsysteme verwendet, die zwei oder mehr verschiedene Übergangsmetallverbindungen, z. B. Metallocene enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen oder das Olefin wird vor der Zugabe in das Polymerisationssystem mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.
Dabei wird die erfindungsgemäße Verbindung in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Geeignete Lösemittel zur Darstellung sowohl der erfindungsgemäßen geträgerten chemischen Verbindung als auch des erfindungsgemäßen Katalysatorsystems sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Vor Zugabe des Katalysatorsystems enthaltend mindestens eine erfindungsgemäße geträgerte chemische Verbindung, und mindestens eine Übergangsmetallverbindung (wie ein Metallocen) kann zusätzlich eine andere Alkylaluminiumverbindung wie beispielsweise Trimethylaluminium, Triethylaluminium, Triisobutylaluminium, Trioctylaluminium oder Isoprenytaluminium zur Inertisierung des Polymerisationssystems (beispielsweise zur Abtrennung vorhandener Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 01 mmol Al pro kg Reaktorinhalt eingesetzt, dadurch kann bei der Synthese eines geträgerten Katalysatorsystems das molare Al/M-Verhältnis klein gewählt werden.

### Die nachfolgenden Beispiele dienen zur näheren Erläuterung der Erfindung

Allgemeine Angaben: Herstellung und Handhabung der Verbindungen erfolgten unter Ausschulβ von Luft und Feuchtigkeit unter Argonschutz (Schlenk-Technik). Alle benötigten Lösemittel wurden vor Gebrauch durch mehrstündiges Sieden übeer geeignete Trockenmittel und anschließende Destillation unter Argon absolutiert.

Die Herstellung der Di(pentafluorphenyl)borinsäure (R. D. Chambers et al., J. Chem. Soc., 1965, 3933) und der Di(phenyl)borinsäure (G. E. Coates, J. G. Livingstone, J. Chem. Soc. 1961, 4909) erfolgte nach Literaturvorschriften.

### 1. Beispiel: Synthese von Di[bis(pentafluorphenylboroxy)]methylalan

5 ml Trimethylaluminium (2M in Toluol, 10 mmol) werden in 45 ml Toluol vorgelegt. Bei - 40 °C werden zu dieser Lösung 6.92 Di(pentafluorphenyl)borinsäure (20 mmol) in 50 ml Toluol über 15 Minuten zugetropft. Es wird 1 Stunde bei- 40 °C gerührt und anschließend eine weitere Stunde bei Raumtemperatur. Die leicht trübe, hellgelbe Lösung wird über eine G4-Fritte filtriert. Es resultiert eine klare, hellgelbe Lösung (0.1 M bezogen auf Al) von Bis(pentafluorphenylboroxy)methylalan in Toluol.

### 2. Beispiel: Synthese von Di[bis(phenylboroxy)]methylalan

5 ml Trimethylaluminium (2M in Toluol, 10 mmol) werden in 45 ml Toluol vorgelegt. Bei - 40 °C werden zu dieser Lösung 3.32 Di(phenyl)borinsäure (20 mmol) in 50 ml Toluol über 15 Minuten zugetropft. Es wird 1 Stunde bei - 40 °C gerührt und anschließend eine weitere Stunde bei Raumtemperatur. Die leicht trübe, hellgelbe Lösung wird über eine G4-Fritte filtriert . Es resultiert eine klare, hellgelbe Lösung (0.1 M bezogen auf Al) von Bis(phenylboroxy)methyllalan in Toluol.

### 3. Beispiel: Synthese von Di[bis(pentafluorphenylboroxy)]isopropylalan

10 ml Triisopropylaluminium (1M in Toluol, 10 mmol) werden in 50 ml Toluol vorgelegt. Bei - 40 °C werden zu dieser Lösung 6.92 g Di(pentafluorphenyl)borinsäure (20 mmol) in 50 ml Toluol über 15 Minuten zugetropft. Es wird 1 Stunde bei - 40 °C gerührt und anschließend eine weitere Stunde bei Raumtemperatur. Die klare Lösung (0.1 M bezogen auf Al) von Bis(pentafluorphenylboroxy)triisopropylalan kann direkt zur Polymerisation eingesetzt werden.

### 4. Beispiel: Synthese von Di[bis(phenylboroxy)]isoprobylalan

10 ml Triisopropylaluminium (1M in Toluol, 10 mmol) werden in 50 ml Toluol vorgelegt. Bei - 40 °C werden zu dieser Lösung 3.32 Di(phenyl)borinsäure (20 mmol) in 50 ml Toluol über 15 Minuten zugetropft. Es wird 1 Stunde bei - 40 °C gerührt und anschließend eine weitere Stunde bei Raumtemperatur. Die klare Lösung (0.1 M bezogen auf Al) von Bis(phenylboroxy)triisopropylalan kann direkt zur Polymerisation eingesetzt werden.

### 5. Beispiel: Herstellung des Katalysatorsystems

Zu einer Lösung von 53 mg (90 µmol) Dimethylsilandiylbis(2-methyl-4-phenyl-indenyl)-zirkoniumdimethyl in 10.75 ml Toluol werden 9 ml der im Beispiel 1 hergestellten Stammlösung an Co-Katalysator zugegeben. Anschließend werden 0.25 ml Trimethylatuminium (2M in Toluol) zugespritzt und danach wird 1 Stunde bei Raumtemperatur nachgerührt. Zum Einschleusen in das Polymerisationssystem werden 0.5 ml der hergestellten Stammlösung eingesetzt.

### 6. Beispiel: Polymerisation

Ein 300 ml Polymerisationsautoklav (Parr 4560) wird unter Argonatmosphäre mit 150 ml Heptan befüllt. Anschließend werden 1.1 ml TIBA (20% ig) zudosiert und 20 Minuten bei 20 °C gerührt. Danach wird der Reaktor auf 50 °C aufgeheizt und 0.5 ml der unter Beispiel 5 hergestellten Katalysatorlösung werden eingespritzt. Anschließend wird ein Ethylendruck von 10 bar aufgepreßt und es wird eine Stunde bei gleichbleibenden Ethylendruck polymerisiert. Es resultieren 10.6 g Polyethylen-Pulver. Die Katalysatoraktivität betrug 8.08 kg PE/g Metallocen x h.

### 7. Beispiel: Herstellung des Katalysatorsystems

Zu einer Lösung von 100 mg (0,229 mmol) Dimethylsilandiylbis(2-methylindenyl)zirkoniumdimehtyl in 25 ml Toluol und 22.9 ml der im Beispiel 1 hergestellten Stammlösung an Co-Katalysator werden portionsweise 10 g SiO₂(MS 3030, Fa. PQ, getrocknet bei 600 °C im Argonstrom) zugegeben. Man läßt eine Stunde bei Raumtemperatur rühren und entfernt dann das Lösemittel im Ölpumpenvakuum bis zur Gewichtskonstanz. Zum Einschleusen in das Polymerisationssystem werden 1 g des geträgerten Katalysators in 30 ml Exxol resuspendiert.

### 8. Beispiel: Polymerisation

Parallel dazu wird ein trockener 16-dm3-Reaktor zunächst mit Stickstoff und anschließend mit Propylen gespült und mit 10 dm3 flüssigem Propylen befüllt. Dann wurden 0.5 cm³ einer 20%igen Triisobutylaluminiumlösung in Varsol mit 30 cm³ Exxol verdünnt in den Reaktor gegeben und der Ansatz bei 30 °C 15 Minuten gerührt. Anschließend wurde die Katalysator-Suspension in den Reaktor gegeben. Das Reaktionsgemisch wurde auf die Polymerisationstemperatur von 60 °C aufgeheizt (4 °C/min) und das Polymerisationssystem 1 h durch Kühlung bei 60 °C gehalten. Gestoppt würde die Polymerisation durch Abgasen des restlichen Propylens. Das Polymer wurde im Vakuumtrockenschrank getrocknet. Es resultieren 1,7 kg Polypropylen-Pulver. Der Reaktor zeigte keine Beläge an Innenwand oder Rührer. Die Katalysatoraktivität betrug 174 kg PP/g Metallocen x h.

## Patentansprüche

1. Chemische Verbindung der Formel A 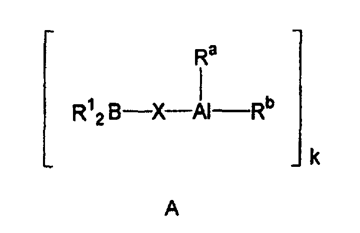 worin R¹ gleich oder verschieden sind und ein Wasserstoffatom. C₁-C₂₀-Halogenalkyl, C₆-C₂₀-Aryl, C₆-C₂₀-Halogenaryl, C₆-C₂₀-Aryloxy, C₇-C₄₀-Arylalkyl oder C₇-C₄₀-Halogenarylalkyl, C₇-C₄₀-Alkylaryl, C₇-C₄₀-Halogenalkylaryl sind, oder R¹ ist eine OSiR₃³-Gruppe, worin R³ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalky, C₇-C₄₀-Alkylaryl, C₇-C₄₀-Halogenalkylaryl sind, oder R¹ ist eine CH(SiR⁴₃)₂-Gruppe, worin R⁴ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalkyl, C₇-C₄₀-Alkylaryl, C₇-C₄₀-Halogenalkylaryl sind,
X ist gleich oder verschieden ein Element der Gruppe Vla des Periodensystems der Elemente oder eine NR-Gruppe, mit R gleich Wasserstoff oder C₁-C₂₀-Alkyl oder C₆-C₂₀-Aryl,
R^{a} und R^{b} sind gleich oder verschieden und sind ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalky, C₇-C₄₀-AlkyIaryl, C₇-C₄₀-Halogenalkylaryl, oder R^{a} oder R^{b} sind eine OSiR₃³-Gruppe, worin R³ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind, oder R^{a} oder R^{b} sind -X-BR¹₂, worin X und R¹ die oben genannten Bedeutungen haben,
und k ist eine ganze Zahl von 1 bis 100.

2. Verfahren zur Herstellung einer chemischen Verbindung der Formel A gemäß Anspruch 1, worin mindestens eine Verbindung der Formel IV und V mit mindestens einer Verbindung der Formel VI umgesetzt wird
R¹ ₂B―XR⁶ IV
R¹ ₂B―X―BR¹ ₂ V 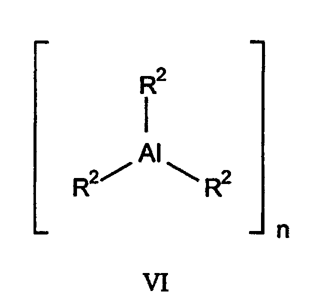
worin R⁶ ein Wasserstoffatom oder C₁-C₂₀-Alkyl, C₆-C₂₀-Aryl, C₇-C₄₀-Arylalky, C₇-C₄₀-Alkylaryl ist und
worin R¹ gleich oder verschieden sind und ein Wasserstoffatom, C₁-C₂₀-Halogenalkyl, C₆-C₂₀-Aryl, C₆-C₂₀-Halogenaryl, C₆-C₂₀-Aryloxy, C₇-C₄₀-Arylalky, C₇-C₄₀-Halogenarylalkyl, C₇-C₄₀-Alkylaryl, C₇-C₄₀-Halogenalkylaryl sind oder R¹ ist eine OSiR₃³-Gruppe, worin R³ gleich oder verschieden sind und ein Wasserstoffatom, ein Halogenatom, C₁-C₂₀-Alkyl. C₁-C₂₀-Halogenalkyl, C₁-C₁₀-Alkoxy. C₆-C₂₀-Aryl. C₆-C₂₀-Halogenaryl, C₆-C₂₀-Aryloxy, C₇-C₄₀-Arylalkyl, C₇-C₄₀-Halogenarylalky, C₇-C₄₀-Alkylaryl, C₇-C₄₀-Halogenalkylaryl sind, oder R¹ ist eine CH(SiR⁴₃)₂-Gruppe, worin R⁴ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-ArylalkyI, C₇-C₄₀-Halogenarylalkyl, C₇-C₄₀-Alkylaryl, C₇-C₄₀-Halogenalkylaryl sind,
R² sind gleich oder verschieden ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalkyl, C₇-C₄₀-Alkylaryl, C₇-C₄₀-Halogenalkylaryl, oder R² ist eine OSiR₃³-Gruppe, worin R³ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-ArylaIkyI, C₇-C₄₀-Halogenarylalkyl, C₇-C₄₀-Alkylaryl, C₇-C₄₀-Halogenalkylaryl sind,
X ist gleich verschieden ein Element der Gruppe VIa des Periodensystems der Elemente oder eine NR-Gruppe, worin R ein Wasserstoffatom oder C₆-C₂₀-Aryl ist,
und n ist eine ganze Zahl von 1 bis 10.

3. Verfahren zur Herstellung einer cokatalytisch wirkenden Organoboraluminiumverbindung, worin mindestens ein Hydroxy-organo-borin der Formel IV mit mindestens einer Organoaluminiumverbindung der Formel VI umgesetzt wird,
R¹ ₂B-XR⁶ IV 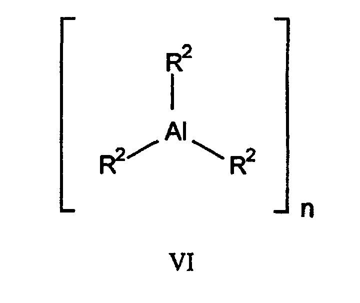
worin
R⁶ ein Wasserstoffatom ist,
X ein Sauerstoffatom ist,
R¹ gleich oder verschieden sind und ein Wasserstoffatom, C₁-C₂₀-Halogenalkyl, C₆-C₂₀-Aryl, C₆-C₂₀-Halogenaryl, C₆-C₂₀-Aryloxy, C₇-C₄₀-Arylalky, C₇-C₄₀-Halogenarylalkyl, C₇-C₄₀-Alkylaryl, C₇-C₄₀-Halogenalkylaryl sind oder R¹ ist eine OSiR₃³-Gruppe, worin R³ gleich oder verschieden sind und ein Wasserstoffatom, ein Halogenatom, C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalky, C₇-C₄₀-Alkylaryl, C₇-C₄₀-Halogenalkylaryl sind, oder R¹ ist eine CH(SiR⁴₃)₂-Gruppe, worin R⁴ gleich oder verschieden sind und ein Wasserstoffatom, ein Halogenatom, C₁-C₂₀-AIkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-AlkylaryI, C₇-C₄₀-Halogenalkylaryl sind,
R² gleich oder verschieden sind und C₁-C₂₀-AIkyl sind, und
n gleich 1, 2, 3 oder 4 ist.

4. Organoboraluminiumverbindung erhältlich durch ein Verfahren gemäß Anspruch 3.

5. Katalysatorsystem, enthaltend
a) mindestens eine chemische Verbindung der Formel A gemäß Anspruch 1 oder eine Organoboraluminiumverbindung gemäß Anspruch 4
und
b) mindestens eine Übergangsmetallverbindung.

6. Katalysatorsystem erhältlich durch Kontaktieren
a) mindestens einer chemischen Verbindung der Formel A gemäß Anspruch 1 oder einer Organoboraluminiumverbindung gemäß Anspruch 4
und
b) mindestens einer Übergangsmetallverbindung.

7. Katalysatorsystem erhältlich durch Kontaktieren
a) mindestens einer nicht isolierten chemischen Verbindung der Formel A gemäß Anspruch 1 oder einer nicht isolierten Organoboraluminiumverbindung gemäß Anspruch 4
und
b) mindestens einer Übergangsmetallverbindung.

8. Katalysatorsystem gemäß einem oder mehreren der Ansprüche 5 bis 7 zusätzlich enthaltend einen Träger.

9. Verfahren zur Herstellung eines Polyolefins in Gegenwart eines Katalysatorsystems gemäß einem oder mehreren der Ansprüche 5 bis 8.

10. Verwendung eines Katalysatorsystems gemäß einem oder mehreren der Ansprüche 5 bis 8 zur Olefinpolymerisation.

## Claims

1. A chemical compound of the formula A 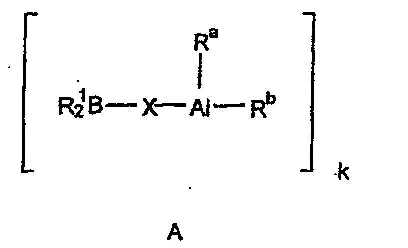 where R¹ are identical or different and are each a hydrogen atom, C₁-C₂₀-haloalkyI, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkylaryl or an OsiR₃³ group, where R³ are identical or different and are each a hydrogen atom, a halogen atom, C₁-C₂₀-alkyI, C₁-C₂₀-haloalkyI, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl, or R¹ is a CH(SiR⁴₃)₂ group, where R⁴ are identical or different and are each a hydrogen atom, a halogen atom, C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl,
X are identical or different and are each an element of group VIa of the Periodic Table of the Elements or an NR group, where R is hydrogen or C₁-C₂₀-alkyl or C₆-C₂₀-aryl,
R^{a} and R^{b} are identical or different and are each a hydrogen atom, a halogen atom, C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkyl-aryl or an OsiR³₃ group, where R³ are identical or different and are each a hydrogen atom, a halogen atom, C₁-C₂₀-alkyl, C₁-C₂₀-haloalkyI, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl, or R^{a} or R^{b} are -X-BR¹₂, where X and R¹ are as defined above,
and k is an integer from 1 to 100.

2. A process for preparing a chemical compound of the formula A as claimed in claim 1, which comprises reacting at least one compound of the formula IV or V with at least one compound of the formula VI
R¹ ₂B―XR⁶ IV
R¹ ₂B―X―BR¹ ₂ V 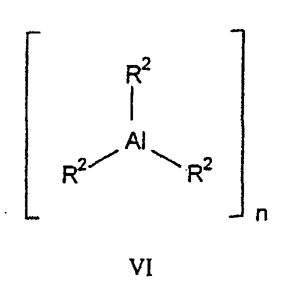
where R⁶ is a hydrogen atom or C₁-C₂₀-alkyl, C₆-C₂₀-aryl, C₇-C₄₀-arylalkyl or C₇-C₄₀-alkylaryl and
R¹ are identical or different and are each a hydrogen atom, C₁-C₂₀-haloalkyI, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkyl-aryl or an OsiR₃³ group, where R³ are identical or different and are each a hydrogen atom, a halogen atom, C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl, or R¹ is a CH(SiR⁴₃)₂ group, where R⁴ are identical or different and are each a hydrogen atom, a halogen atom, C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl,
R² are identical or different and are each a hydrogen atom, a halogen atom, C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkyl-aryl or an OSiR₃³ group, where R³ are identical or different and are each a hydrogen atom, a halogen atom, C₁-C₂₀-alkyl, C₁-C₂₀-haloalkyI, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl,
X are identical or different and are each an element of group VIa of the Periodic Table of the Elements or an NR group, where R is a hydrogen atom or C₆-C₂₀-aryl,
and n is an integer from 1 to 10.

3. A process for preparing a cocatalytically active organoboroaluminum compound, which comprises reacting at least one hydroxyorganoborin of the formula IV with at least one organoaluminum compound of the formula VI,
R¹ ₂B-XR⁶ IV 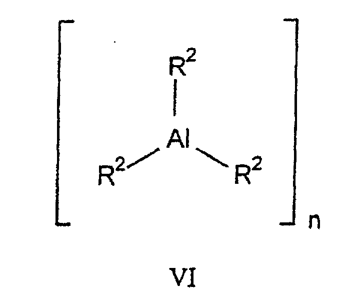
where
R⁶ is a hydrogen atom,
X is an oxygen atom,
R¹ are identical or different and are each a hydrogen atom, C₁-C₂₀-haloalkyI, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkylaryl or an OSiR₃³ group, where R³ are identical or different and are each a hydrogen atom, a halogen atom, C₁-C₂₀-alkyI, C₁-C₂₀-haloalkyI, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl, or R¹ is a CH(SiR⁴₃)₂ group, where R⁴ are identical or different and are each a hydrogen atom, a halogen atom, C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl,
R² are identical or different and are each C₁-C₂₀-alkyl, and
n is 1, 2, 3 or 4.

4. An organoboroaluminum compound obtainable by a process as claimed in claim 3.

5. A catalyst system comprising
a) at least one chemical compound of the formula A as claimed in claim 1 or an organoboroaluminum compound as claimed in claim 4 and
b) at least on transition metal compound.

6. A catalyst system obtainable by bringing
a) at least one chemical compound of the formula A as claimed in claim 1 or an organoboroaluminum compound as claimed in claim 4
into contact with
b) at least one transition metal compound.

7. A catalyst system obtainable by bringing
a) at least one chemical compound of the formula A as claimed in claim 1 which has not been isolated or an organoboroaluminum compound as claimed in claim 4 which has not been isolated
into contact with
b) at least one transition metal compound.

8. A catalyst system as claimed in any of claims 5 to 7 which further comprises a support.

9. A process for preparing a polyolefin in the presence of a catalyst system as claimed in any of claims 5 to 8.

10. The use of a catalyst system as claimed in any of claims 5 to 8 for olefin polymerization.

## Revendications

1. Composé chimique de formule A 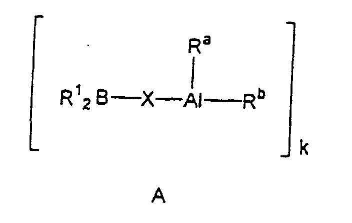 où
R¹ sont identiques ou différents et sont un atome d'hydrogène, un halogénoalkyle en C₁-C₂₀, un aryle en C₆-C₂₀, un halogénoaryle en C₆-C₂₀, un aryloxy en C₆-C₂₀, un arylalkyle en C₆-C₂₀ ou halogénoarylalkyle en C₇-C₄₀, un alkylaryle en C₇-C₄₀, un halogénoalkylaryle en C₇-C₄₀, ou R¹ est un groupe OSiR³₃, dans lequel R³ sont identiques ou différents et sont un atome d'halogène, un alkyle en C₁-C₂₀ un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀ ou halogénoarylalkyle en C₇-C₄₀, un alkylaryle en C₇-C₄₀, un halogénoalkylaryle en C₇-C₄₀, ou R¹ est un groupe CH(SiR⁴₃)₂, dans lequel R⁴ sont identiques ou différents et sont un atome d'hydrogène, un atome d'halogène, un alkyle en C₁-C₂₀, un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀, un halogénoarylalkyle en C₇-C₄₀, un alkylaryle en C₇-C₄₀, un halogénoalkylaryle en C₇-C₄₀,
X, identique ou différent, est un élément du groupe VIa de la classification périodique des éléments ou un groupe NR, avec R représentant l'hydrogène ou un alkyle en C₁-C₂₀ ou aryle en C₆-C₂₀,
R^{a} et R^{b} sont identiques ou différents et sont un atome d'hydrogène, un atome d'halogène, un alkyle en C₁-C₂₀, un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀, un halogénoarylalkyle en C₇-C₄₀, un alkylaryle en C₇-C₄₀, un halogénoalkylaryle en C₇-C₄₀, ou R^{a} ou R^{b} sont un groupe OSiR³₃, dans lequel R³ sont identiques ou différents et sont un atome d'hydrogène, un atome d'halogène, un alkyle en C₁-C₂₀, un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀, un halogénoarylalkyle en C₇-C₄₀, un alkylaryle en C₇-C₄₀, un halogénoalkylaryle en C₇-C₄₀, ou R^{a} ou R^{b} sont -X-BR¹₂, dans lequel X et R¹ ont les significations indiquées ci-dessus, et k est un nombre entier de 1 à 100.

2. Procédé pour la préparation d'un composé chimique de formule A selon la revendication 1, dans lequel on fait réagir au moins un composé de formule IV et V avec au moins un composé de formule VI
R¹ ₂B―XR⁶ IV
R¹ ₂B ―X―BR¹ ₂ V 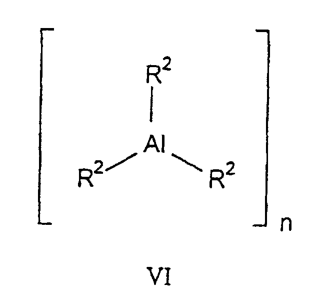
où R⁶ est un atome d'hydrogène ou un alkyle en C₁-C₂₀, un aryle en C₆-C₂₀, un arylalkyle en C₇-C₄₀, un alkylaryle en C₇-C₄₀ et
où R¹ sont identiques ou différents et sont un atome d'hydrogène, un halogénoalkyle en C₁-C₂₀, un aryle en C₆-C₂₀, un halogénoaryle en C₆-C₂₀, un aryloxy en C₆-C₂₀, un arylalkyle en C₇-C₄₀, un halogénoarylalkyle en C₇-C₄₀, un alkylaryle en C₇-C₄₀, un halogénoalkylaryle en C₇-C₄₀, ou R¹ est un groupe OSiR³₃, dans lequel R³ sont identiques ou différents et sont un atome d'hydrogène, un atome d'halogène, un alkyle en C₁-C₂₀, un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀, un halogénoarylalkyle en C₇-C₄₀, un alkylaryle en C₇-C₄₀, un halogénoalkylaryle en C₇-C₄₀, ou R¹ est un groupe CH(SiR⁴₃)₂, dans lequel R⁴ sont identiques ou différents et sont un atome d'hydrogène, un atome d'halogène, un alkyle en C₁-C₂₀, un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀, un halogénoarylalkyle en C₇-C₄₀, un alkylaryle en C₇-C₄₀, un halogénoalkylaryle en C₇-C₄₀,
R² sont identiques ou différents et sont un atome d'hydrogène, un atome d'halogène, un alkyle en C₁-C₂₀, un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀, un halogénoarylalkyle en C₇-C₄₀, un alkylaryle en C₇-C₄₀, un halogénoalkylaryle en C₇-C₄₀, ou R² est un groupe OSiR³₃, dans lequel R³ sont identiques ou différents et sont un atome d'hydrogène, un atome d'halogène, un alkyle en C₁-C₂₀, un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀, un halogénoarylalkyle en C₇-C₄₀, un alkylaryle en C₇-C₄₀, un halogénoalkylaryle en C₇-C₄₀,
X, identique ou différent, est un élément du groupe VIa de la classification périodique des éléments ou un groupe NR, dans lequel R est un atome d'hydrogène ou un aryle en C₆-C₂₀,
et n est un nombre entier de 1 à 10.

3. Procédé pour la préparation d'un composé d'organoboroaluminium à action co-catalytique, dans lequel on fait réagir au moins un composé d'hydroxy-organo-bore de formule IV avec au moins un composé d'organoaluminium de formule VI,
R¹ ₂B-XR⁶ IV 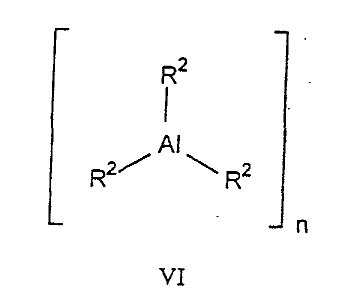
où
R⁵ est un atome d'hydrogène,
X est un atome d'oxygène,
R¹ sont identiques ou différents et sont un atome d'hydrogène, un halogénoalkyle en C₁-C₂₀, un aryle en C₆-C₂₀, un halogénoaryle en C₆-C₂₀, un aryloxy en C₆-C₂₀, un arylalkyle en C₆-C₂₀ ou halogénoarylalkyle en C₇-C₄₀, un alkylaryle en C₇-C₄₀, un halogénoalkylaryle en C₇-C₄₀, ou R¹ est un groupe OSiR³₃, dans lequel R³ sont identiques ou différents et sont un atome d'halogène, un alkyle en C₁-C₂₀, un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀ ou halogénoarylalkyle en C₇-C₄₀, un alkylaryle en C₇-C₄₀, un halogénoalkylaryle en C₇-C₄₀, ou R¹ est un groupe CH(SiR⁴₃)₂, dans lequel R⁴ sont identiques ou différents et sont un atome d'hydrogène, un atome d'halogène, un alkyle en C₁-C₂₀, un halogénoalkyle en C₁-C₂₀, un alcoxy en C₁-C₁₀, un aryle en C₆-C₂₀, un halogénoaryle en C₆-C₂₀, un aryloxy en C₆-C₂₀, un arylalkyle en C₇-C₄₀, un halogénoarylalkyle en C₇-C₄₀, un alkylaryle en C₇-C₄₀, un halogénoalkylaryle en C₇-C₄₀,
R² sont identiques ou différents et sont un alkyle en C₁-C₂₀, et
n vaut 1, 2, 3 ou 4.

4. Composé d'organoboroaluminium pouvant être obtenu par un procédé selon la revendication 3.

5. Système catalytique, contenant
a) au moins un composé chimique de formule A selon la revendication 1 ou un composé d'organoboroaluminium selon la revendication 4
et
b) au moins un composé de métal de transition.

6. Système catalytique pouvant être obtenu par mise en contact de
a) au moins un composé chimique de formule A selon la revendication 1 ou un composé d'organoboroaluminium selon la revendication 4
et
b) au moins un composé de métal de transition.

7. Système catalytique pouvant être obtenu par mise en contact de
a) au moins un composé chimique non isolé de formule A selon la revendication 1 ou un composé d'organoboroaluminium non isolé selon la revendication 4
et
b) au moins un composé de métal de transition.

8. Système catalytique selon une ou plusieurs des revendications 5 à 7, contenant en outre un support.

9. Procédé pour la préparation d'une polyoléfine en présence d'un système catalytique selon l'une ou plusieurs des revendications 5 à 8.

10. Utilisation d'un système catalytique selon l'une ou plusieurs des revendications 5 à 8 pour la polymérisation d'oléfines.
